(19) Europäisches Patentamt / European Patent Office / Office européen des brevets

(11) **EP 4 550 548 A1**

(12) **EUROPEAN PATENT APPLICATION**
published in accordance with Art. 153(4) EPC

(43) Date of publication:
07.05.2025  Bulletin 2025/19

(21) Application number: 23831515.4

(22) Date of filing: 28.06.2023

(51) International Patent Classification (IPC):
$H01M\ 50/291^{(2021.01)}$    $H01G\ 11/10^{(2013.01)}$
$H01G\ 11/78^{(2013.01)}$    $H01M\ 50/213^{(2021.01)}$
$H01M\ 50/242^{(2021.01)}$    $H01M\ 50/244^{(2021.01)}$
$H01M\ 50/289^{(2021.01)}$

(52) Cooperative Patent Classification (CPC):
H01G 11/10; H01G 11/78; H01M 50/213;
H01M 50/242; H01M 50/244; H01M 50/289;
H01M 50/291; Y02E 60/10

(86) International application number:
PCT/JP2023/023986

(87) International publication number:
WO 2024/005075 (04.01.2024 Gazette 2024/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.06.2022  JP 2022106420
30.06.2022  JP 2022106504
30.06.2022  JP 2022106549

(71) Applicant: **Panasonic Intellectual Property
Management Co., Ltd.
Kadoma-shi, Osaka 571-0057 (JP)**

(72) Inventors:
• **TAKASAKI, Hiroshi
Kadoma-shi, Osaka 571-0057 (JP)**
• **SAWADA, Koichi
Kadoma-shi, Osaka 571-0057 (JP)**

(74) Representative: **Novagraaf International SA
Chemin de l'Echo 3
1213 Onex, Geneva (CH)**

(54) **POWER STORAGE MODULE**

(57)    This power storage module comprises at least one cylindrical power storage device (60), and a lower holder (11) that holds the power storage device (60) in the axial direction (Z). The lower holder (11) includes a body (12) which includes a container portion (12A) that holds the power storage device (60), and an outer peripheral portion (13) that surrounds the body (12) with a gap (14) provided from the body (12). If a direction orthogonal to the axis direction (Z) of the power storage device (60) is a direction (Y), and a direction orthogonal to both the axial direction and the direction (Y) is a direction (X), the gap (14) includes a gap (14A) between the body (12) and the outer peripheral portion (13) in the direction (Y), in which gap (14A) a shock absorbing portion is provided.

Figure 1

EP 4 550 548 A1

## Description

TECHNICAL FIELD

The present disclosure relates to a power storage module, and more particularly to a structure of a holder that holds a power storage device.

BACKGROUND ART

A power storage module is used as a power source which comprises a plurality of power storage devices. There may be a case in which a power storage module is mounted in a vehicle. In this case, when an impact load is applied to the vehicle upon a side collision, for example, the load can be applied to power storage devices, thus causing deformation of the power storage devices and making the power storage devices unsafe. Patent Literature 1, for example, discloses a technique in which a recessed shape is provided for a holder so as to cause the holder to be ruptured upon a side collision of a vehicle, and thus a load is prevented from being applied to power storage devices.

CITATION LIST

PATENT LITERATURE

PATENT LITERATURE 1: Japanese Unexamined Patent Application Publication No. 2015-156320

SUMMARY

In the power storage module mounted in a vehicle, there is still room for improvement in reduction of load that is applied to power storage devices when an impact load is applied to the power storage module.

An object of the present disclosure is to provide a power storage module that can reduce a load applied to power storage devices when an impact load is applied to the power storage module.

A power storage module according to the present disclosure comprises: at least one power storage device having a cylindrical shape; and a holder configured to maintain the power storage device in an axial direction, wherein the holder includes a body and an outer peripheral part, the body including a housing configured to hold the power storage device, the outer peripheral part surrounding the body with gaps provided between the outer peripheral part and the body, and when a direction orthogonal to the axial direction of the power storage device is taken as a first direction, and a direction orthogonal to both the axial direction and the first direction is taken as a second direction, an impact buffer is provided in a first gap among the gaps, the first gap being between the body and the outer peripheral part in the first direction.

According to the power storage module of the present disclosure, it is possible to reduce a load that is applied to the power storage device when an impact load is applied to the power storage module.

BRIEF DESCRIPTION OF DRAWINGS

FIG. 1 is a perspective view showing a power storage module of a first embodiment.

FIG. 2 is a plan view showing the power storage module of the first embodiment.

FIG. 3 is a schematic view showing a power storage device.

FIG. 4A is a plan view showing the operation and advantageous effects of the power storage module of the first embodiment.

FIG. 4B is a plan view showing the continuation of FIG. 4A.

FIG. 4C is a plan view showing the continuation of FIG. 4B.

FIG. 5 is a perspective view showing a power storage module of a second embodiment.

FIG. 6 is a plan view showing the power storage module of the second embodiment.

FIG. 7A is a plan view showing the operation and advantageous effects of the power storage module of the second embodiment.

FIG. 7B is a plan view showing the continuation of FIG. 7A.

FIG. 7C is a plan view showing the continuation of FIG. 7B.

FIG. 8 is a perspective view showing a power storage module of a third embodiment.

FIG. 9 is a plan view showing the power storage module of the third embodiment.

FIG. 10A is a plan view showing the operation and advantageous effects of the power storage module of the third embodiment.

FIG. 10B is a plan view showing the continuation of FIG. 10A.

FIG. 10C is a plan view showing the continuation of FIG. 10B.

FIG. 11 is a perspective view showing a lower holder in a fourth embodiment.

FIG. 12 is a plan view showing a pole crushing pusher in the fourth embodiment.

FIG. 13 is a plan view showing the operation and advantageous effects of a power storage module of the fourth embodiment.

FIG. 14 is a plan view showing a battery pack of the fourth embodiment.

FIG. 15 is a sectional plan view showing a vehicle of the fourth embodiment.

FIG. 16 is a sectional view taken along the line A-A of FIG. 15.

FIG. 17 is a perspective view showing a lower holder in a fifth embodiment.

FIG. 18 is a plan view showing the operation and advantageous effects of a power storage module of the fifth embodiment.

DESCRIPTION OF EMBODIMENTS

<0. Summary of Embodiment>

Hereinafter, exemplary embodiments of the present disclosure will be described in detail. In the description below, specific shapes, materials, directions, numerical values, and the like are merely examples given to facilitate understanding of the present disclosure, and may be suitably changed according to applications, purposes, specifications, or the like.

Hereinafter, five embodiments of the power storage module will be described. The power storage module of the respective embodiments differ from each other in the structure of a lower holder. As described in detail later, with the power storage module, it is possible to reduce a load that is applied to power storage devices when an impact load is applied to the power storage module.

Hereinafter, in the respective embodiments, members that are the same as those in other embodiments are given the same symbol. Further, in the respective embodiments, a member given a different symbol from the corresponding member in other embodiments has the same configuration as the corresponding member in other embodiments unless otherwise particularly described.

Hereinafter, the power storage module is described taking the axial direction of a power storage device having a cylindrical shape and described later as an up-down direction Z, taking a direction orthogonal to the up-down direction Z as a direction Y, and taking a direction orthogonal to both the up-down direction Z and the direction Y as a direction X.

The power storage module of each embodiment is mounted in an electric vehicle as a power source for a motor that drives the electric vehicle. The power storage module is not limited to be mounted in an electric vehicle, and may be used as a power source for electrically powered equipment driven by a motor, such as a power tool, a power-assisted bicycle, an electric motorcycle, an electric wheelchair, an electric tricycle, or an electric cart, for example. Application of the power storage module is not limited, and the power storage module may also be used as a power source for various kinds of electric equipment used indoors or outdoors, such as a cleaner, radio equipment, an illumination apparatus, a digital camera, or a video camera, for example.

The power storage module of each embodiment may be provided in a power storage pack. The power storage pack is a power source which is provided for a body of an electric vehicle, and in which a plurality of power storage modules are disposed within a casing. The power storage module of each embodiment may be provided for a body of a vehicle.

<1-1. Configuration of Power Storage Module of First Embodiment>

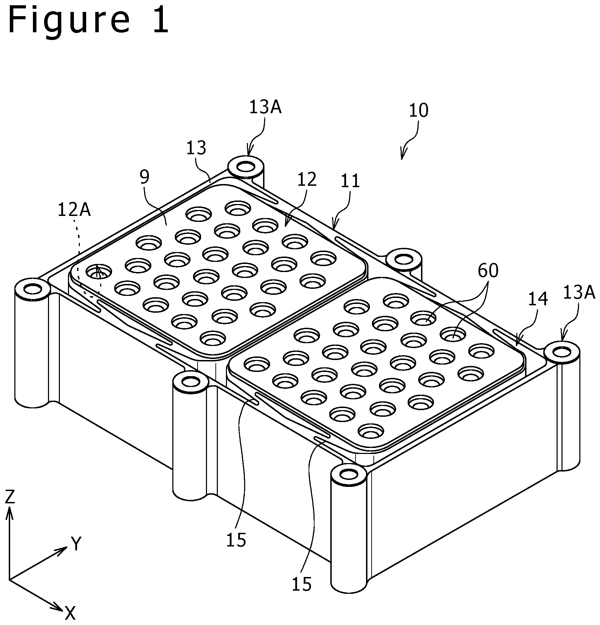

The configuration of a power storage module 10 of a first embodiment will be described with reference to FIGS. 1 to 4C.

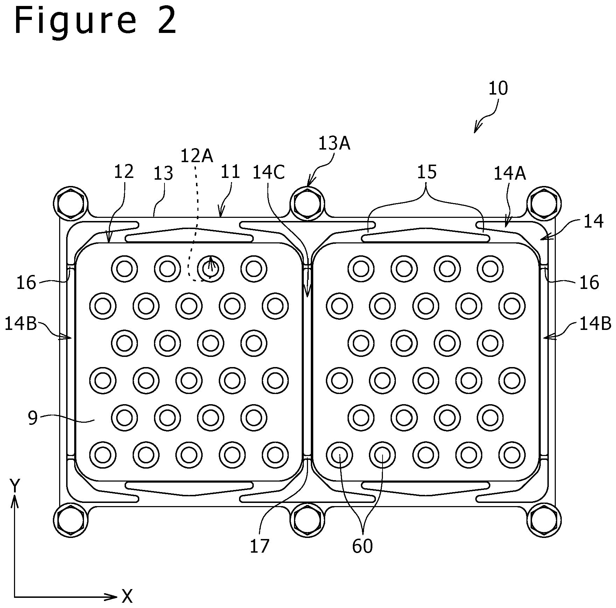

As shown in FIGS. 1 and 2, the power storage module 10 comprises a plurality of cylindrical power storage devices 60, an upper holder 9, and a lower holder 11, the upper holder 9 holding the upper side of each of the plurality of power storage devices 60 in the up-down direction Z, the lower holder 11 serving as a holder that holds the lower side of each of the plurality of power storage devices 60.

The plurality of power storage devices 60 are loaded in the power storage module 10 most densely in consideration of safety, and may be arranged such that adjacent power storage devices 60 are substantially proximate to each other. The power storage device 60 are arranged such that, for example, as viewed in a plan view, one power storage device 60 is surrounded by six power storage devices 60 (or arranged in a staggered manner).

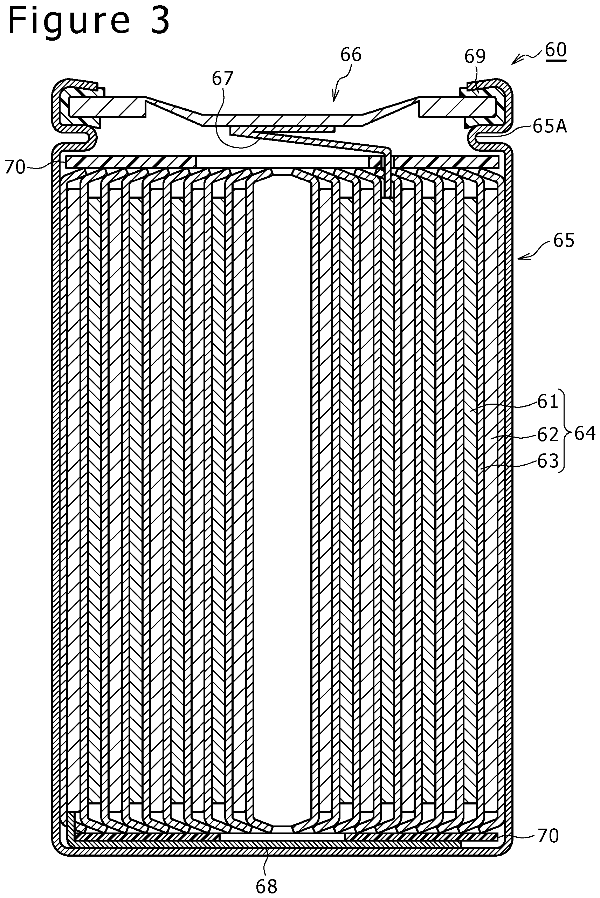

As shown in FIG. 3, in the present embodiment, cylindrical lithium ion secondary batteries are used as the power storage devices 60; however, nickel hydrogen batteries, capacitors, or the like may be used. Each power storage device 60 includes, for example, an electrode group 64, an outer can 65, a sealing assembly 66, a positive electrode lead 67, and a negative electrode lead 68, a belt-like positive electrode 61 and a belt-like negative electrode 62 being wound with a belt-like separator 63 interposed therebetween in the electrode group 64, the cylindrical outer can 65 housing the electrode group 64 together with an electrolyte solution, the sealing assembly 66 sealing the opening of the outer can 65 in an insulated state, the foil-shaped positive electrode lead 67 electrically connecting the positive electrode 61 to the sealing assembly 66, the negative electrode lead 68 electrically connecting the negative electrode 62 to the outer can 65. An insulating gasket 69 may be disposed between the outer periphery of the sealing assembly 66 and the inner peripheral surface of the opening of the outer can 65.

An annular-shaped groove 65A is formed on the outer peripheral surface of the outer can 65 at a position close to the opening. This groove 65A forms an annular protrusion on the inner peripheral surface of the outer can 65. The gasket 69 and the sealing assembly 66 are disposed on this annular protrusion in the outer can 65. In addition, the opening end of the outer can 65 is swaged in such a way as to be inclined toward the inside of the outer can 65 with the gasket 69 disposed on the inner peripheral side. The sealing assembly 66 is clamped in the axial direction between the swaged opening end and the projection with the gasket 69 interposed therebetween, thus sealing the opening of the outer can 65.

The sealing assembly 66 may be provided with a current interrupt device (CID) or with an exhaust valve that is broken when the pressure in the outer can 65 reaches a pressure greater than or equal to a predetermined pressure. An insulating plate 70 may be provided between the electrode group 64 and the bottom of the outer can 65, or between the electrode group 64 and the projection (the groove 65A) in order to provide insulation between the electrode group 64 and the outer can 65. In the case in which the insulating plate 70 is provided, the positive electrode lead 67 may extend through a through hole formed in the insulating plate 70. The negative electrode lead 68 may pass through a through hole formed in the insulating plate 70, or may extend by bypassing the insulating plate 70. As described above, in the power storage device 60, a positive electrode terminal may be constituted on the top surface of the sealing assembly 66, and a negative electrode terminal may be constituted at a swaged shoulder part of the outer can 65.

Again, as shown in FIGS. 1 and 2, the upper holder 9 holds the upper side of each of the plurality of power storage devices 60 as described above. The upper holder 9 is made of a thermoplastic resin, for example. Thermoplastic resins are roughly classified into general-purpose plastics and engineering plastics, and polyethylene, polypropylene, polyamide, ABS, or the like is used.

As described above, the lower holder 11 serving as the holder holds the lower side of each of the plurality of power storage devices 60. The length of the lower holder 11 in the up-down direction Z is sufficiently larger than the length of the upper holder 9 in the up-down direction Z. Therefore, the lower holder 11 holds the intermediate part and the lower part of each of the plurality of power storage devices 60. Similar to the upper holder 9, the lower holder 11 is made of a thermoplastic resin, for example.

The lower holder 11 includes a plurality of bodies 12 and an outer peripheral part 13, each of the plurality of bodies 12 holding the plurality of power storage devices 60, the outer peripheral part 13 surrounding the bodies 12 with a gap 14 provided therebetween. Although two bodies 12 are arranged side by side in the direction X in the lower holder 11 in the present embodiment, the configuration is not limited to such a configuration. Three or more bodies 12 may be arranged side by side in the direction X, or two or more bodies 12 may be arranged side by side in the direction Y.

Each body 12 is formed to have a substantially rectangular shape as viewed from the up-down direction Z, and all corners of the body 12 are formed to have an arc shape. Housings 12A are formed in each body 12 so as to house the plurality of power storage devices 60. The housings 12A are formed to have a circular shape as viewed from the up-down direction Z. The intermediate parts and the lower parts of the power storage devices 60 are fitted in the housings 12A.

As described above, the outer peripheral part 13 is formed to surround the bodies 12 with the gap 14 provided therebetween. The outer peripheral part 13 is formed into a cylindrical shape having a rectangular cross section as viewed from the up-down direction Z. The two bodies 12 are arranged side by side in the direction X and hence, the outer peripheral part 13 in the present embodiment is formed into a rectangular frame shape with the longitudinal direction extending in the direction X as viewed from the up-down direction Z. The length of the outer peripheral part 13 in the up-down direction Z is substantially equal to the length of the bodies 12 in the up-down direction Z. Although the outer peripheral part 13 is a cylindrical wall in the present embodiment, the configuration is not limited to such a configuration. For example, the outer peripheral part 13 may be formed of a plurality of walls that expand in the direction X, and that are disposed with the bodies 12 interposed therebetween in the direction Y.

The outer peripheral part 13 includes a plurality of fastening parts 13A arranged in the direction X. For example, the fastening parts 13A are formed on the outer peripheral part 13 at positions corresponding to the corners of the bodies 12 so as to fasten the lower holder 11 to a power storage pack (not shown). Six fastening parts 13A are formed on the outer peripheral part 13. The lower holder 11 in the present embodiment is fastened and fixed to the power storage pack with fixing members, such as bolts. The lower holder 11 may be fastened and fixed to the body of a vehicle with fixing members, such as bolts. Each fastening part 13A has a cylindrical shape so as to be fastened to the bolt having high rigidity, and may include a female screw part in which a thread is formed on the inner peripheral surface. This female screw part is a member having high rigidity so as to withstand fastening of the bolt. Therefore, the fastening parts 13A have particularly high rigidity in the outer peripheral part 13. In addition, the fastening parts 13A are fastened and fixed to a member of the power storage pack or to the vehicle body as described above, thus being particularly less likely to be displaced in the power storage module 10.

As described above, the gap 14 is a gap part formed between the bodies 12 and the outer peripheral part 13. The gap 14 includes gaps 14A as first gaps, gaps 14B as second gaps, and a gap 14C as a third gap, as described in detail later.

The gaps 14A as the first gaps are formed between the bodies 12 and the outer peripheral part 13 in the direction Y. As described in detail later, with the gaps 14A, when an impact load is applied from one side of the outer peripheral part 13 in the direction Y upon a side collision of a vehicle (or electronic equipment), the gap 14A on the other side provides a relief margin for the body 12. With such a configuration, the body 12 can be moved toward the other side in the direction Y within the outer peripheral part 13. Support parts 15, as described in detail later, are formed in the gaps 14A.

A plurality of support parts 15 couple a plurality of second connection parts to first connection parts of the outer peripheral part 13, the plurality of second connection parts being arranged in the direction X of the bodies 12 as viewed from the up-down direction Z. More specifically, each support part 15 extends in an inclined manner in such a way as to intersect with the direction Y, and is coupled to a portion of the outer peripheral part 13 which faces the center part of the body 12 in the direction X. In other words, the support parts 15 form a truss structure as viewed from the up-down direction Z. The support parts 15 are provided at both ends of each body 12 in the Y direction. The adjacent support parts 15 may be formed as an integral part, or may be coupled to different first connection parts. The length of the support parts 15 in the up-down direction Z is substantially equal to the length of the bodies 12 and the length of the outer peripheral part 13 in the up-down direction Z. The support parts 15 may be formed in the gaps 14B. The above-mentioned lengths in the up-down direction Z may differ from each other.

With the support parts 15, when an impact load is applied from one side of the outer peripheral part 13 in the direction Y upon a side collision of a vehicle, it is possible to disperse the impact load from the outer peripheral part 13 to the body 12. The impact load is dispersed to both end portions of the body 12 in the direction X, at which the power storage devices 60 are not disposed, and hence, it is possible to press the body 12 in the direction Y while avoiding the load acting on the power storage devices 60.

The gaps 14B as the second gaps are formed between the bodies 12 and the outer peripheral part 13 in the direction X. With the formation of the gaps 14B, when an impact load is applied from one side of the outer peripheral part 13 in the direction Y upon a side collision of a vehicle, the body 12 can be slid toward the other side in the direction Y within the outer peripheral part 13. Fragile parts 16, as described in detail later, are formed in the gaps 14B.

The fragile parts 16 as second fragile parts couple the bodies 12 to the outer peripheral part 13 in the direction X. In a case in which the body 12 is about to move in the direction Y relative to the outer peripheral part 13, when a stress greater than or equal to a predetermined stress is generated in the fragile parts 16, the fragile parts 16 are ruptured.

The gap 14C as the third gap is formed between the body 12 and the adjacent body 12. With the formation of the gap 14C, when an impact load is applied from one side of the outer peripheral part 13 in the direction Y upon a side collision of a vehicle, the body 12 can be slid toward the other side in the direction Y within the outer peripheral part 13. Fragile parts 17, as described in detail later, are formed in the gap 14C.

The fragile parts 17 as third fragile parts couple the body 12 to the adjacent body 12 in the direction X. In a case in which the body 12 is about to move in the direction Y relative to the adjacent body 12, when a stress greater than or equal to a predetermined stress is generated in the fragile parts 17, the fragile parts 17 are ruptured.

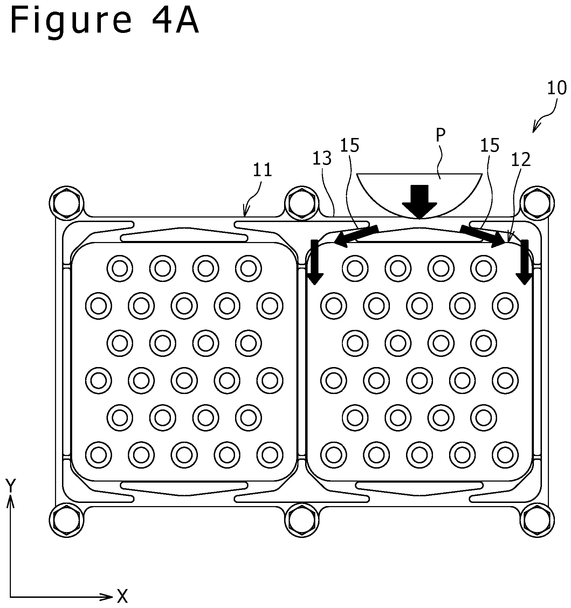

The present disclosure assumes a side collision of a vehicle (or electronic equipment) in which the power storage module 10 is mounted. Thus, a collision test from the direction Y is performed on the power storage module 10 using a pole crushing pusher P. As shown in FIG. 4A, an impact load is applied to the power storage module 10 from one side in the direction Y by the pole crushing pusher P.

At this point, the impact load acts on one side of the outer peripheral part 13 of the lower holder 11 in the direction Y, so that the outer peripheral part 13 is pressed by the action of the load, the support parts 15 are pressed by the outer peripheral part 13, and both end portions of the body 12 in the direction X are then pressed by the support parts 15.

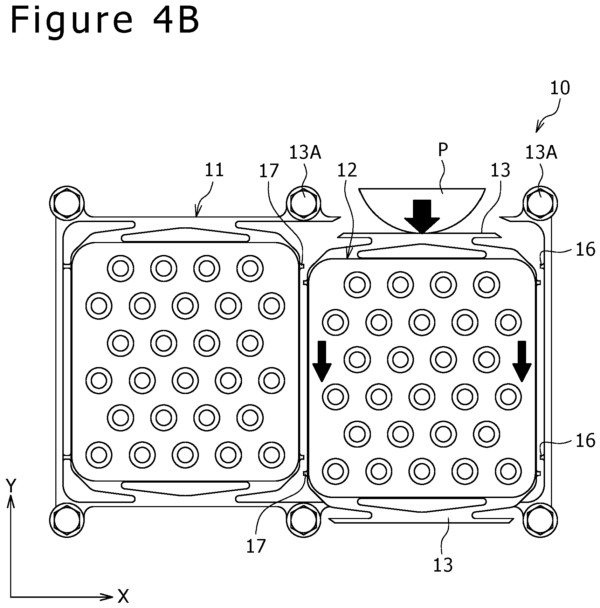

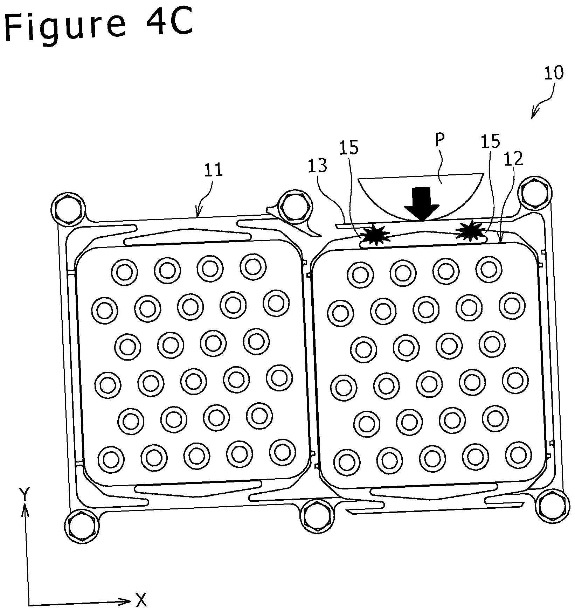

First fragile parts that are more fragile than the support parts 15 are provided for the outer peripheral part 13 at positions between the first connection parts and the fastening parts 13A in the direction X. As shown in FIG. 4(B), the outer peripheral part 13 is ruptured at the first fragile parts by the impact load of the pole crushing pusher P. As described above, the end portions of the body 12 in the direction X are pressed and hence, the body 12 is moved toward the other side in the direction Y. Due to the movement of the body 12 toward the other side in the direction Y, the fragile parts 16 and the fragile parts 17 are ruptured, and the outer peripheral part 13 on the other side in the direction Y is ruptured at the first fragile parts. At this point, since the gap 14A on the other side in the direction Y provides a relief margin, it is possible to prevent the body 12 from being collapsed by the impact load. In addition, as shown in FIG. 4C, the support parts 15 are ruptured.

With the power storage module 10, even when an impact load acts, due to rupture in two stages, that is, rupture of the outer peripheral part 13 and rupture of the support parts 15, and due to provision of the gaps 14A to ensure a relief margin for the body 12, the impact load is absorbed by the lower holder 11, thus reducing the load that acts on the power storage devices 60. Consequently, it is possible to increase a withstand load of the power storage module 10.

<2-1. Configuration of Power Storage Module of Second Embodiment>

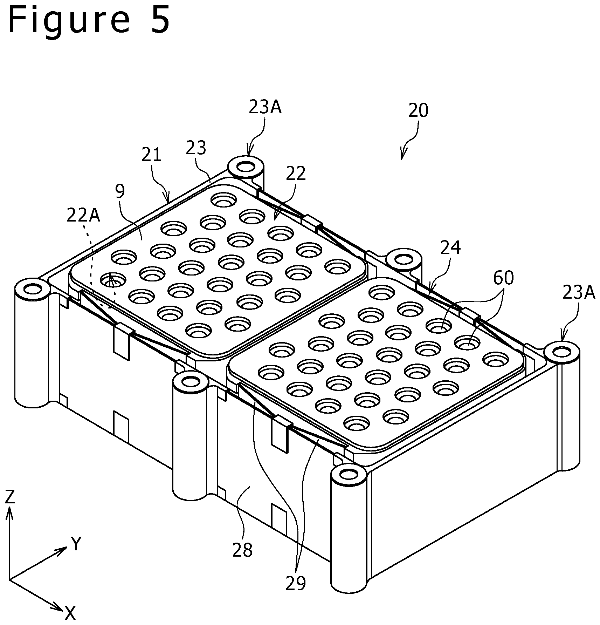

The configuration of a power storage module 20 of a second embodiment will be described with reference to FIGS. 5 to 7C.

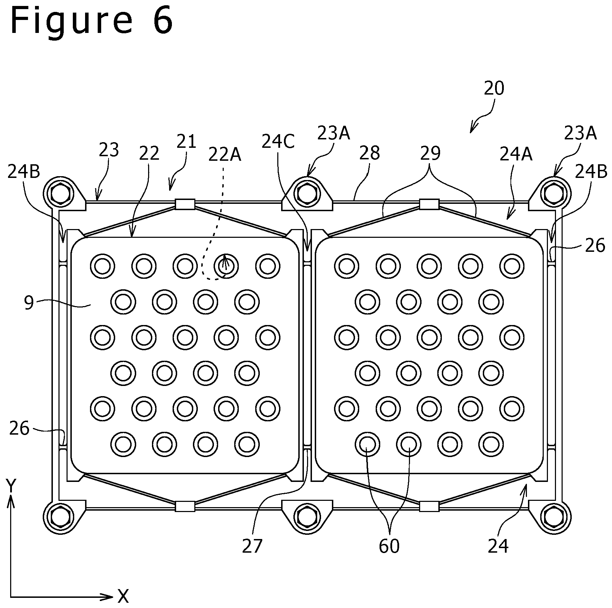

As shown in FIGS. 5 and 6, the power storage module 20 comprises a plurality of cylindrical power storage devices 60, an upper holder 9, and a lower holder 21, the upper holder 9 holding the upper side of each of the plurality of power storage devices 60 in the up-down direction Z, the lower holder 21 serving as a holder that holds the lower side of each of the plurality of power storage devices 60. The power storage devices 60 and the upper holder 9 have the same configurations as those in the first embodiment and hence, the description of such components will be omitted.

As described above, the lower holder 21 serving as the holder holds the lower side of each of the plurality of power storage devices 60. The length of the lower holder 21 in the up-down direction Z is sufficiently larger than the length of the upper holder 9 in the up-down direction Z. Therefore, the lower holder 21 holds the intermediate part and the lower part of each of the plurality of power storage devices 60. Similar to the upper holder 9, the lower holder 21 is made of a thermoplastic resin, for example.

The lower holder 21 includes a plurality of bodies 22 and an outer peripheral part 23, each of the plurality of bodies 22 holding the plurality of power storage devices 60, the outer peripheral part 23 surrounding the bodies 22 with a gap 24 provided therebetween. Although two bodies 22 are arranged side by side in the direction X in the lower holder 21 in the present embodiment, the configuration is not limited to such a configuration. Three or more bodies 22 may be arranged side by side in the direction X, or two or more bodies 22 may be arranged side by side in the direction Y.

Each body 22 is formed to have a substantially rectangular shape as viewed from the up-down direction Z, and all corners of the body 22 are formed to have an arc shape. Housings 22A are formed in each body 22 so as to house the plurality of power storage devices 60. The housings 22A are formed to have a circular shape as viewed from the up-down direction Z. The intermediate parts and the lower parts of the power storage devices 60 are fitted in the housings 22A.

As described above, the outer peripheral part 23 is formed to surround the bodies 22 with the gap 24 provided therebetween. The outer peripheral part 23 is formed into a cylindrical shape having a rectangular cross section as viewed from the up-down direction Z. The two bodies 22 are arranged side by side in the direction X and hence, the outer peripheral part 23 in the present embodiment is formed into a rectangular frame shape with the longitudinal direction extending in the direction X as viewed from the up-down direction Z. The length of the outer peripheral part 23 in the up-down direction Z is substantially equal to the length of the bodies 22 in the up-down direction Z. Although the outer peripheral part 23 is a cylindrical wall in the present embodiment, the configuration is not limited to such a configuration. For example, the outer peripheral part 23 may be formed of a plurality of walls that expand in the direction X, and that are disposed with the bodies 22 interposed therebetween in the direction Y.

The outer peripheral part 23 includes a plurality of fastening parts 23A arranged in the direction X. For example, the fastening parts 23A are formed on the outer peripheral part 23 at positions corresponding to the corners of the bodies 22 so as to fasten the lower holder 21 to a power storage pack (not shown). Six fastening parts 23A are formed on the outer peripheral part 23. The lower holder 21 in the present embodiment is fastened and fixed to the power storage pack with fixing members, such as bolts. The lower holder 21 may be fastened and fixed to the body of a vehicle with fixing members, such as bolts. Each fastening part 23A has a cylindrical shape so as to be fastened to the bolt having high rigidity, and may include a female screw part in which a thread is formed on the inner peripheral surface. This female screw part is a member having high rigidity so as to withstand fastening of the bolt. Therefore, the fastening parts 23A have particularly high rigidity in the outer peripheral part 23. In addition, these fastening parts are fastened and fixed to a member of the power storage pack or to the vehicle body as described above, thus being particularly less likely to be displaced in the power storage module 20.

Portions of the outer peripheral part 23 which extend along the direction X are constituted of members that can buffer impact and can suppress vibrations, and for example, are constituted of first leaf springs 28. The first leaf spring 28 has a plate shape, is formed from a metal plate made of iron, stainless steel, copper, or the like, and has spring characteristics greater than or equal to a predetermined level. The first leaf spring 28 and a second leaf spring 29 may be fixed with each other by a clip or the like at a first connection part.

As described above, the gap 24 is a gap part formed between the bodies 22 and the outer peripheral part 23. The gap 24 includes gaps 24A as first gaps, gaps 24B as second gaps, and a gap 24C as a third gap, as described in detail later.

The gaps 24A as the first gaps are formed between the bodies 22 and the outer peripheral part 23 in the direction Y. As described in detail later, with the gaps 24A, when an impact load is applied from one side of the outer peripheral part 23 in the direction Y upon a collision of a vehicle, the gap 24A on the other side provides a relief margin for the body 22. With such a configuration, the body 22 can be moved toward the other side in the direction Y within the outer peripheral part 23. The second leaf springs 29, as described in detail later, are formed in the gaps 24A.

Each second leaf spring 29 has a plate shape, is formed from a metal plate made of iron, stainless steel, copper, or the like, and has spring characteristics greater than or equal to a predetermined level. The second leaf spring 29 is, for example, constituted of a V-shaped plate material which protrudes toward the outer peripheral part 23. However, the second leaf spring 29 may have a flat surface at a first connection part which is coupled to the first leaf spring 28. The second leaf spring 29 is coupled to a pair of second connection parts of the body 22, the pair of second connection parts being arranged in the direction X. More specifically, the second leaf spring 29 couples the end portions of the body 22 in the direction X as viewed from the up-down direction Z to a portion of the outer peripheral part 23 which faces the center part of the body 22 in the direction X. In other words, the second leaf spring 29 forms a truss structure as viewed from the up-down direction Z. The length of the second leaf spring 29 in the up-down direction Z is substantially equal to the length of the bodies 22 and the length of the outer peripheral part 23 in the up-down direction Z. However, the above-mentioned lengths in the up-down direction Z may differ from each other.

As described in detail later, with the second leaf springs 29, when an impact load is applied from one side of the outer peripheral part 23 in the direction Y upon a side collision of a vehicle, it is possible to absorb the impact load. The impact load is dispersed to the second connection parts of the body 22, which are arranged in the direction X, and at which the power storage devices 60 are not disposed, and hence, it is possible to press the body 22 in the direction Y while avoiding the load acting on the power storage devices 60.

The configuration is not limited to the present embodiment. The first leaf springs 28 may be formed on portions of the outer peripheral part 23 along the direction Y, and the second leaf springs 29 may be provided in the gaps 24B.

The gaps 24B as the second gaps are formed between the bodies 22 and the outer peripheral part 23 in the direction X. With the formation of the gaps 24B, when an impact load is applied from one side of the outer peripheral part 23 in the direction Y upon a side collision of a vehicle, the body 22 can be slid toward the other side in the direction Y within the outer peripheral part 23. Fragile parts 26, as described in detail later, are formed in the gaps 24B.

The fragile parts 26 as second fragile parts couple the bodies 22 to the outer peripheral part 23 in the direction X. In a case in which the body 22 is about to move in the direction Y relative to the outer peripheral part 23, when a stress greater than or equal to a predetermined stress is generated in the fragile parts 26, the fragile parts 26 are ruptured.

The gap 24C as the third gap is formed between the body 22 and the adjacent body 22. With the formation of the gap 24C, when an impact load is applied from one side of the outer peripheral part 23 in the direction Y upon a side collision of a vehicle, the body 22 can be slid toward the other side in the direction Y within the outer peripheral part 23. Fragile parts 27, as described in detail later, are formed in the gap 24C.

The fragile parts 27 as third fragile parts couple the body 22 to the adjacent body 22 in the direction X. In a case in which the body 22 is about to move in the direction Y relative to the adjacent body 22, when a stress greater than or equal to a predetermined stress is generated in the fragile parts 27, the fragile parts 27 are ruptured.

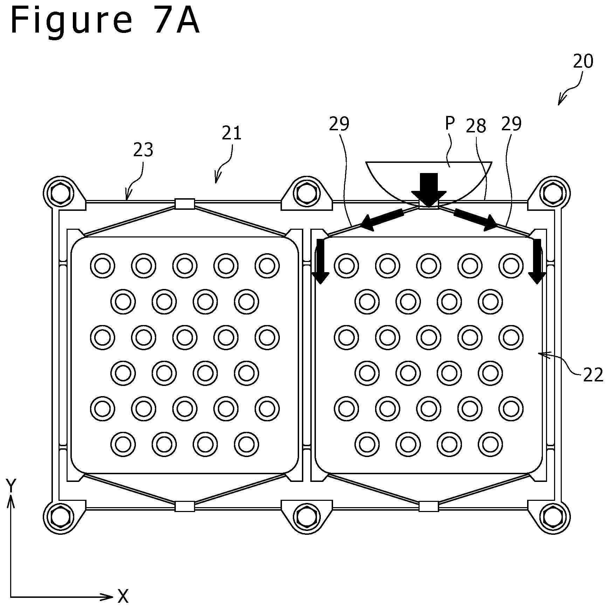

The present disclosure assumes a side collision of a vehicle (or electronic equipment) in which the power storage module 20 is mounted. Thus, a collision test from the direction Y is performed on the power storage module 20 using a pole crushing pusher P. As shown in FIG. 7A, an impact load is applied to the power storage module 20 from one side in the direction Y by the pole crushing pusher P.

At this point, the impact load acts on one side of the outer peripheral part 23 of the lower holder 21 in the direction Y, so that the first leaf spring 28 is pressed by the action of the load, the second leaf spring 29 is pressed by the first leaf spring 28, and the second connection parts of the body 22 are then pressed by the second leaf spring 29.

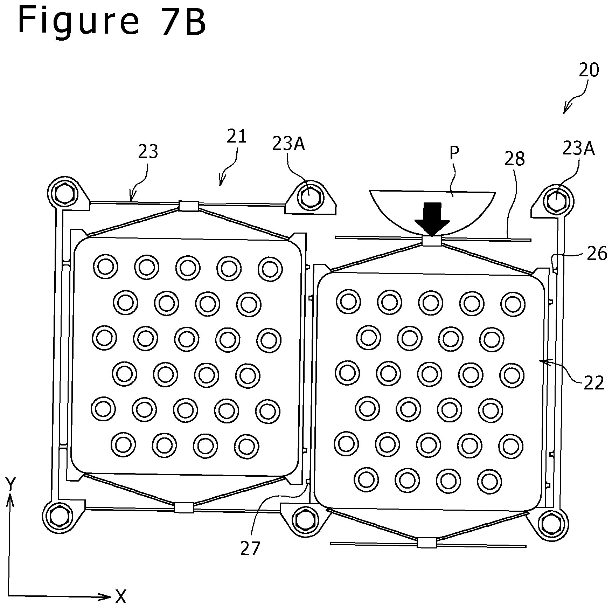

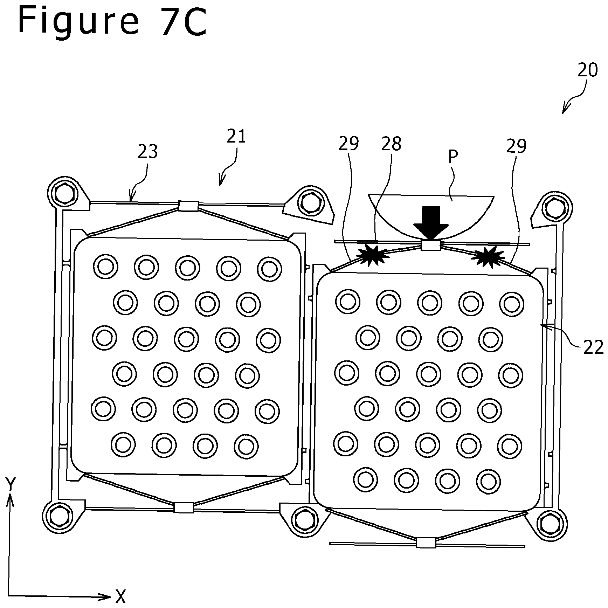

First fragile parts that are more fragile than the second leaf spring 29 are provided for the outer peripheral part 23 at positions between first connection parts and the fastening parts 23A in the direction X. As shown in FIG. 7B, the outer peripheral part 23 is ruptured at the first fragile parts by the impact load of the pole crushing pusher P. As described above, the second connection parts of the body 22 are pressed and hence, the body 22 is moved toward the other side in the direction Y. Due to the movement of the body 22 toward the other side in the direction Y, the fragile parts 26 and the fragile parts 27 are ruptured, and the first fragile parts of the outer peripheral part 23 on the other side in the direction Y are ruptured. At this point, the gap 24A on the other side in the direction Y provides a relief margin and hence, the body 22 is not collapsed by the impact load. As shown in FIG. 7C, the second leaf spring 29 is deformed and bent.

With the power storage module 20, even when an impact load acts, due to rupture of the first leaf spring from the outer peripheral part 23, due to elastic forces of the first leaf spring 28 and the second leaf spring 29, and due to provision of the gaps 24A to ensure a relief margin for the body 22, the impact load is absorbed by the lower holder 21, thus reducing the load that acts on the power storage devices 60. Consequently, it is possible to increase a withstand load of the power storage module 20.

<3-1. Configuration of Power Storage Module of Third Embodiment>

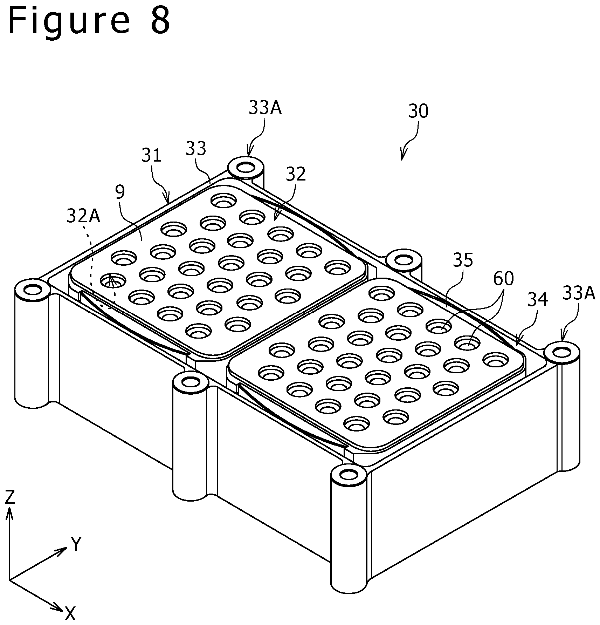

The configuration of a power storage module 30 of a third embodiment will be described with reference to FIGS. 8 to 10C.

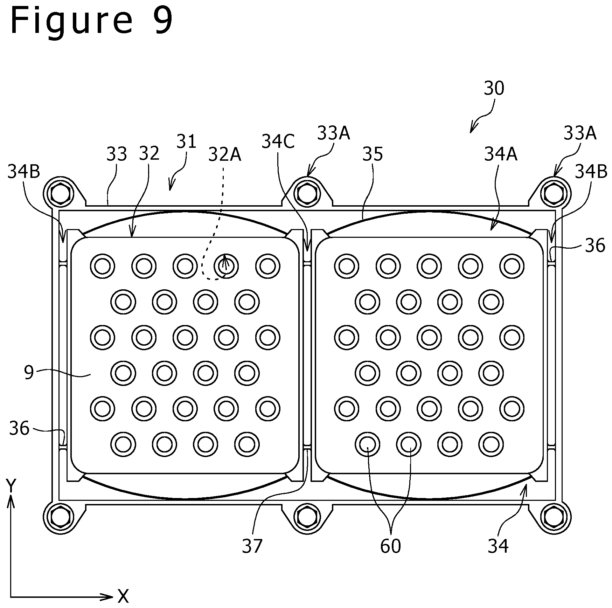

As shown in FIGS. 8 and 9, the power storage module 30 comprises a plurality of cylindrical power storage devices 60, an upper holder 9, and a lower holder 31, the upper holder 9 holding the upper side of each of the plurality of power storage devices 60 in the up-down direction Z, the lower holder 31 serving as a holder that holds the lower side of each of the plurality of power storage devices 60. The power storage devices 60 and the upper holder 9 have the same configurations as those in the first embodiment and hence, the description of such components will be omitted.

As described above, the lower holder 31 serving as the holder holds the lower side of each of the plurality of power storage devices 60. The length of the lower holder 31 in the up-down direction Z is sufficiently larger than the length of the upper holder 9 in the up-down direction Z. Therefore, the lower holder 31 holds the intermediate part and the lower part of each of the plurality of power storage devices 60. Similar to the upper holder 9, the lower holder 31 is made of a thermoplastic resin, for example.

The lower holder 31 includes a plurality of bodies 32 and an outer peripheral part 33, each of the plurality of bodies 32 holding the plurality of power storage devices 60, the outer peripheral part 33 surrounding the bodies 32 with a gap 34 provided therebetween. Although two bodies 32 are arranged side by side in the direction X in the lower holder 31 in the present embodiment, the configuration is not limited to such a configuration. Three or more bodies 32 may be arranged side by side in the direction X, or two or more bodies 32 may be arranged side by side in the direction Y.

Each body 32 is formed to have a substantially rectangular shape as viewed from the up-down direction Z, and all corners of the body 32 are formed to have an arc shape. Housings 32A are formed in each body 32 so as to house the plurality of power storage devices 60. The housings 32A are formed to have a circular shape as viewed from the up-down direction Z. The intermediate parts and the lower parts of the power storage devices 60 are fitted in the housings 32A.

As described above, the outer peripheral part 33 is formed to surround the bodies 32 with the gap 34 provided therebetween. The outer peripheral part 33 is formed into a cylindrical shape having a rectangular cross section as viewed from the up-down direction Z. The two bodies 32 are arranged side by side in the direction X and hence, the outer peripheral part 33 in the present embodiment is formed into a rectangular frame shape with the longitudinal direction extending in the direction X as viewed from the up-down direction Z. The length of the outer peripheral part 33 in the up-down direction Z is substantially equal to the length of the bodies 32 in the up-down direction Z. Although the outer peripheral part 33 is a cylindrical wall in the present embodiment, the configuration is not limited to such a configuration. For example, the outer peripheral part 33 may be formed of a plurality of walls that expand in the direction X, and that are disposed with the bodies 32 interposed therebetween in the direction Y.

The outer peripheral part 33 includes a plurality of fastening parts 33A arranged in the direction X. For example, the fastening parts 33A are formed on the outer peripheral part 33 at positions corresponding to the corners of the bodies 32 so as to fasten the lower holder 31 to a power storage pack (not shown). Six fastening parts 33A are formed on the outer peripheral part 33. The lower holder 31 in the present embodiment is fastened and fixed to the power storage pack with fixing members, such as bolts. The lower holder 31 may be fastened and fixed to the body of a vehicle with fixing members, such as bolts. Each fastening part 33A has a cylindrical shape so as to be fastened to the bolt having high rigidity, and may include a female screw part in which a thread is formed on the inner peripheral surface. This female screw part is a member having high rigidity so as to withstand fastening of the bolt. Therefore, the fastening parts 33A have particularly high rigidity in the outer peripheral part 33. In addition, these fastening parts are fastened and fixed to a member of the power storage pack or to the vehicle body as described above, thus being particularly less likely to be displaced in the power storage module 30.

As described above, the gap 34 is a gap part formed between the bodies 32 and the outer peripheral part 33. The gap 34 includes gaps 34A as first gaps, gaps 34B as second gaps, and a gap 34C as a third gap, as described in detail later.

The gaps 34A as the first gaps are formed between the bodies 32 and the outer peripheral part 33 in the direction Y. As described in detail later, with the gaps 34A, when an impact load is applied from one side of the outer peripheral part 33 in the direction Y upon a collision of a vehicle (or electronic equipment), the gap 34A on the other side provides a relief margin for the body 32. With such a configuration, the body 32 can be moved toward the other side in the direction Y within the outer peripheral part 33. Arch-shaped leaf springs 35, as described in detail later, are provided in the gaps 34A.

Each leaf spring 35 has a plate shape, is formed from a metal plate made of iron, stainless steel, copper, or the like, and has spring characteristics greater than or equal to a predetermined level. The leaf spring 35 is formed into an arch shape which bulges outward in the direction Y as viewed from the up-down direction Z. Both end portions of the leaf spring 35 in the direction X are fixed to a plurality of second connection parts of the body 32, the plurality of second connection parts being arranged in the direction X. The leaf spring 35 is brought into contact with a first connection part, and may press the first connection part. The length of the leaf spring 35 in the up-down direction Z is substantially equal to the length of the bodies 32 and the length of the outer peripheral part 33 in the up-down direction Z. The leaf springs 35 may be provided in the second gaps 34B. However, the above-mentioned lengths in the up-down direction Z may differ from each other.

With the leaf spring 35, when an impact load is applied from one side of the outer peripheral part 33 in the direction Y upon a side collision of a vehicle, it is possible to absorb the impact load. The impact load is dispersed to the second connection parts, which are arranged in the direction X of the body 32, and at which the power storage devices 60 are not disposed, and hence, it is possible to press the body 32 in the direction Y while avoiding the impact load acting on the power storage devices 60.

The gaps 34B as the second gaps are formed between the bodies 32 and the outer peripheral part 33 in the direction X. With the formation of the gaps 34B, when an impact load is applied from one side of the outer peripheral part 33 in the direction Y upon a side collision of a vehicle, the body 32 can be slid toward the other side in the direction Y within the outer peripheral part 33. Fragile parts 36, as described in detail later, are formed in the gaps 34B.

The fragile parts 36 as second fragile parts couple the bodies 32 to the outer peripheral part 33 in the direction X. In a case in which the body 32 is about to move in the direction Y relative to the outer peripheral part 33, when a stress greater than or equal to a predetermined stress is generated in the fragile parts 36, the fragile parts 36 are ruptured.

The gap 34C as the third gap is formed between the body 32 and the adjacent body 32. With the formation of the gap 34C, when an impact load is applied from one side of the outer peripheral part 33 in the direction Y upon a side collision of a vehicle, the body 32 can be slid toward the other side in the direction Y within the outer peripheral part 33. Fragile parts 37, as described in detail later, are formed in the gap 34C.

The fragile parts 37 as third fragile parts couple the body 32 to the adjacent body 32 in the direction X. In a case in which the body 32 is about to move in the direction Y relative to the adjacent body 32, when a stress greater than or equal to a predetermined stress is generated in the fragile parts 37, the fragile parts 37 are ruptured.

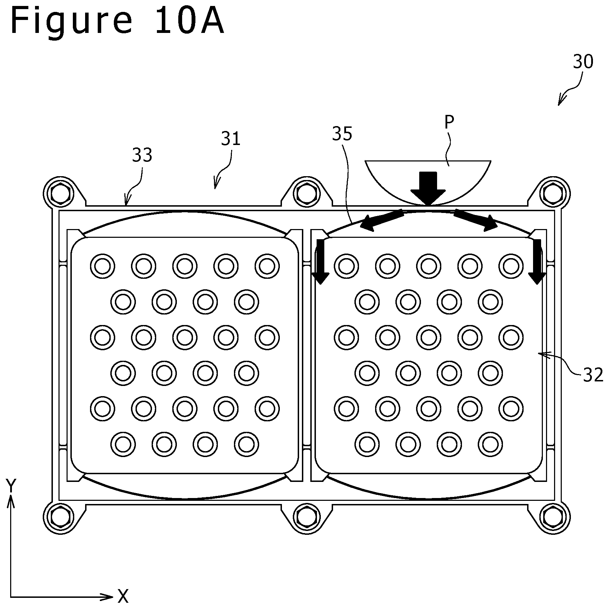

The present disclosure assumes a side collision of a vehicle (or electronic equipment) in which the power storage module 30 is mounted. Thus, a collision test from the direction Y is performed on the power storage module 30 using a pole crushing pusher P. As shown in FIG. 10A, an impact load is applied to the power storage module 30 from one side in the direction Y by the pole crushing pusher P.

At this point, the impact load acts on the right side of the outer peripheral part 33 of the lower holder 31 in the direction Y, so that the outer peripheral part 33 is pressed by the action of the load, the leaf spring 35 is pressed by the outer peripheral part 33, and both end portions of the body 32 in the direction X are then pressed by the leaf spring 35.

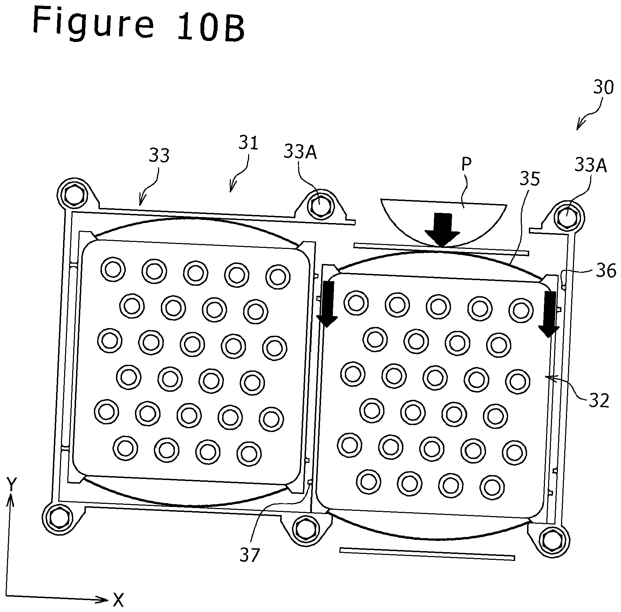

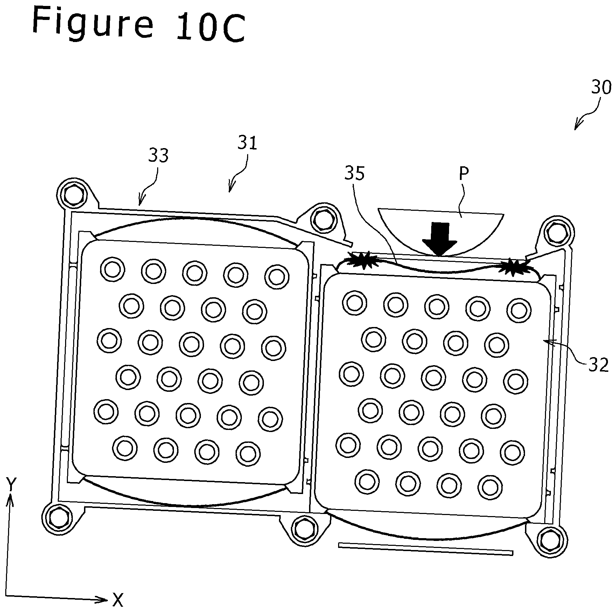

First fragile parts that are more fragile than the leaf spring 35 are provided for the outer peripheral part 33 at positions between first connection parts and the fastening parts 33A in the direction X. As shown in FIG. 10B, the outer peripheral part 33 is ruptured at the first fragile parts by the impact load of the pole crushing pusher P. As described above, the end portions of the body 32 in the direction X are pressed and hence, the body 32 is moved toward the other side in the direction Y. Due to the movement of the body 32 toward the other side in the direction Y, the fragile parts 36 and the fragile parts 37 are ruptured, and the outer peripheral part 33 on the left side in the direction Y is ruptured at the first fragile parts. At this point, since the gap 34A on the left side in the direction Y provides a relief margin, it is possible to prevent the body 32 from being collapsed by the impact load. In addition, as shown in FIG. 10C, the leaf spring 35 is deformed and bent.

With the power storage module 30, even when an impact load acts, due to rupture of the outer peripheral part 33, due to an elastic force of the leaf spring 35, and due to provision of the gaps 34A to ensure a relief margin for the body 32, the impact load is absorbed by the lower holder 31, thus reducing the load that acts on the power storage devices 60. Consequently, it is possible to increase a withstand load of the power storage module 30.

<4-1. Configuration of Power Storage Module of Fourth Embodiment>

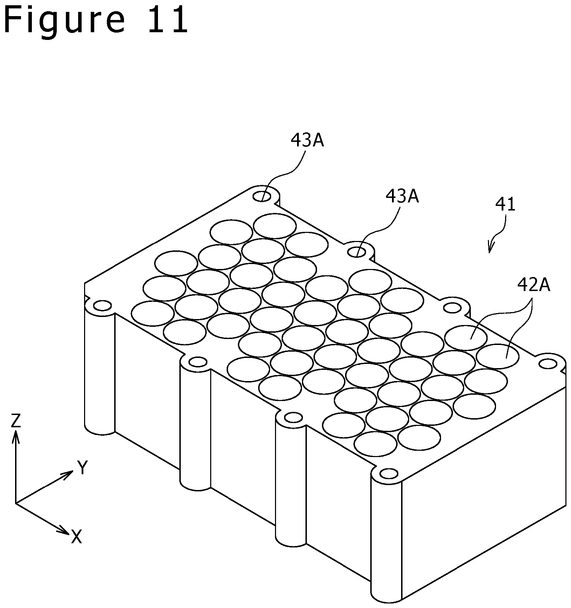

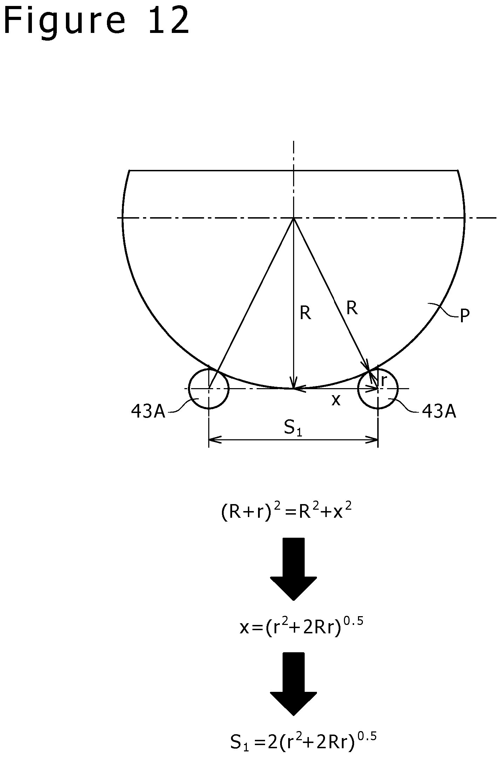

The configuration of a power storage module of a fourth embodiment will be described with reference to FIGS. 11 and 12.

The power storage module comprises a plurality of cylindrical power storage devices 60 (see FIG. 3), an upper holder, and a lower holder 41, the upper holder holding the upper side of each of the plurality of power storage devices in the up-down direction Z, the lower holder 41 serving as a holder that holds the lower side of each of the plurality of power storage devices 60. The power storage devices 60 and the upper holder have the same configurations as those in the first embodiment and hence, the description of such components will be omitted.

As shown in FIG. 11, the lower holder 41 serving as the holder holds the lower side of each of the plurality of power storage devices 60 as described above. The length of the lower holder 41 in the up-down direction Z is sufficiently larger than the length of the upper holder in the up-down direction Z. Therefore, the lower holder 41 holds the intermediate parts and the lower part of each of the plurality of power storage devices 60. Similar to the upper holder, the lower holder 41 is made of a thermoplastic resin, for example.

The lower holder 41 is formed to have a substantially rectangular shape as viewed from the up-down direction Z. Housings 42A are formed in the lower holder 41 so as to house the plurality of power storage devices. The housings 42A are formed to have a circular shape as viewed from the up-down direction Z. The intermediate parts and the lower parts of the power storage devices 60 are fitted in the housings 42A.

A plurality of fastening parts 43A are formed at the end portions of the lower holder 41 in the direction Y so as to fasten the lower holder 41 to a power storage pack (not shown), the plurality of fastening parts 43A being arranged in the direction X. The plurality of fastening parts 43A may be formed at the end portions of the lower holder 41 in the direction X. The lower holder 41 in the present embodiment is fastened and fixed to the power storage pack with fixing members, such as bolts. The lower holder 41 may be fastened and fixed to the body of a vehicle with fixing members, such as bolts. Each fastening part 43A is formed at a semi-circular projection protruding outward in the direction Y as viewed from the up-down direction Z. Each fastening part 43A has a cylindrical shape so as to be fastened to the bolt having high rigidity, and may include a female screw part in which a thread is formed on the inner peripheral surface. This female screw part is a member having high rigidity so as to withstand fastening of the bolt. Therefore, the fastening parts 43A have particularly high rigidity in the lower holder 41. In addition, these fastening parts are fastened and fixed to a member of the power storage pack or to the vehicle body as described above, thus being particularly less likely to be displaced in the power storage module of the present embodiment.

That is, a distance between the fastening part 43A and an adjacent power storage device (first power storage device) is greater than a distance between this power storage device and an adjacent power storage device (second power storage device). That is, the housings 42A described above are not formed in the vicinity of the fastening parts 43A. In other words, the power storage devices 60 are not disposed in the vicinity of the fastening parts 43A. To be more specific, the housings 42A are not formed within a range from each fastening part 43A to less than or equal to the diameter of the power storage device 60 in the direction Y. In other words, the fastening parts 43A are formed such that a distance between the center of each fastening part 43A and the center of the adjacent housing 42A is greater than the diameter of the power storage device 60.

With the above-mentioned configuration, when an impact load is applied to the fastening part 43A from one side in the direction Y upon a side collision of a vehicle (or electronic equipment), since the power storage devices 60 are not disposed in the vicinity of the fastening parts 43A, it is possible to reduce an impact load that acts on the power storage devices 60.

The fastening parts 43A are formed outward of the housings 42A in the direction Y. To be more specific, in the direction Y, the housings 42A are formed inward of the heads of fixing members disposed at the fastening parts 43A.

As shown in FIG. 12, assuming a collision of the pole crushing pusher P having a circular columnar shape from the direction Y, an interval $S_1$ in the direction X between the fastening parts 43A disposed adjacent to each other is determined based on a radius R of the pole crushing pusher P. Specifically, taking the radius of the hole of the fastening part 43A as "r", the interval $S_1$ in the direction X between the fastening parts 43A is determined by the following expression.

[Expression 1]

$$S_1 = 2(r^2 + 2Rr)^{0.5}$$

With the above-mentioned configuration, when the pole crushing pusher P collides with one side in the direction Y, intrusion of the pole crushing pusher P is prevented by the fixing member fastened at the fastening part 43A and the fixing member fastened at the adjacent fastening part 43A.

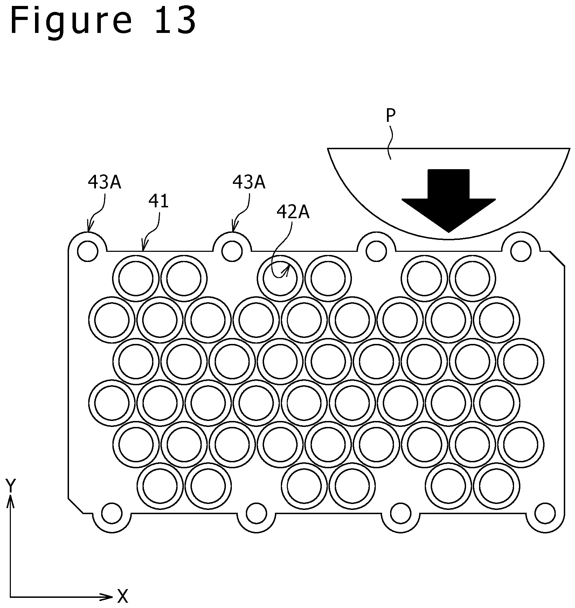

The present disclosure assumes a side collision of a vehicle (or electronic equipment) in which the power storage module is mounted. Thus, a collision test from the direction Y is performed on the power storage module using the pole crushing pusher P. As shown in FIG. 13, an impact load is applied to the power storage module from the right side in the direction Y by the pole crushing pusher P.

For example, when the pole crushing pusher P collides with the fastening part 43A, since the power storage devices 60 are not disposed in the vicinity of the fastening parts 43A, it is possible to reduce an impact load that acts on the power storage devices 60. When the pole crushing pusher P collides with a portion between the fastening part 43A and the adjacent fastening part 43A, since the interval $S_1$ between the fastening part 43A and the adjacent fastening part 43A is determined as described above, intrusion of the pole crushing pusher P is prevented by the fixing member fastened at the fastening part 43 and the fixing member fastened at the adjacent fastening part 43A. Accordingly, it is possible to reduce an impact load that acts on the power storage devices 60.

With the power storage module, even when an impact load acts upon a side collision of a vehicle, it is possible to reduce a load that acts on the power storage devices 60. Consequently, it is possible to increase a withstand load of the power storage module.

<4-2. Configuration of Power Storage Pack of Fourth Embodiment>

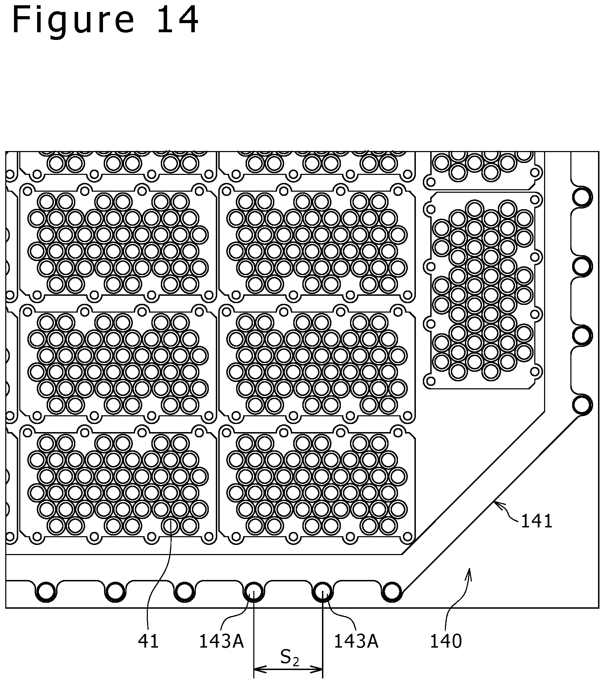

The configuration of a power storage pack 140 of the fourth embodiment will be described with reference to FIG. 14.

As shown in FIG. 14, the power storage pack 140 comprises a plurality of power storage modules and a casing 141, a plurality of cylindrical power storage devices 60 (see FIG. 3) being held by a lower holder 41 in each of the power storage modules, the plurality of power storage modules being disposed in the casing 141. The power storage devices 60 have the same configuration as those in the first embodiment and hence, the description of such components will be omitted.

The casing 141 is formed to have a rectangular shape as viewed from the up-down direction Z. The casing 141 is preferably made of a flame retardant resin. A plurality of fastening parts 143A are formed at the end portions of the casing 141 in the direction Y so as to fasten the casing 141 to a vehicle body. The power storage pack 140 of the present embodiment is fastened and fixed to the vehicle body with fixing members, such as bolts. Each fastening part 143A is formed at a semi-circular projection protruding outward in the direction Y as viewed from the up-down direction Z.

Assuming a collision of the pole crushing pusher P having a circular columnar shape from the direction Y, an interval $S_2$ in the direction X between the fastening part 143A and the adjacent fastening part 143A is determined based on a radius R of the pole crushing pusher P. Specifically, taking the radius of the hole of the fastening part 143A as "r", the interval $S_2$ is determined by the following expression (see FIG. 12).

[Expression 2]

$$S_2 = 2(r^2 + 2Rr)^{0.5}$$

With the above-mentioned configuration, when the pole crushing pusher P collides with one side in the direction Y, intrusion of the pole crushing pusher P is prevented by the fixing member fastened at the fastening part 143A and the fixing member fastened at the adjacent fastening part 143A. Consequently, it is possible to reduce an impact load that acts on the power storage devices 60.

<4-3. Configuration of Vehicle of Fourth Embodiment>

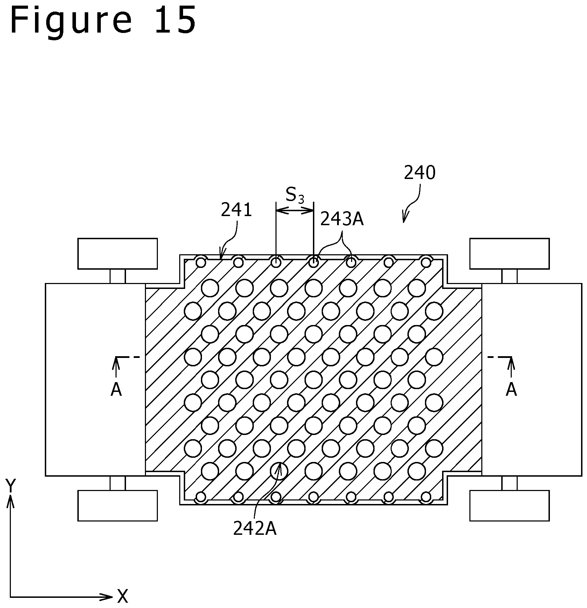

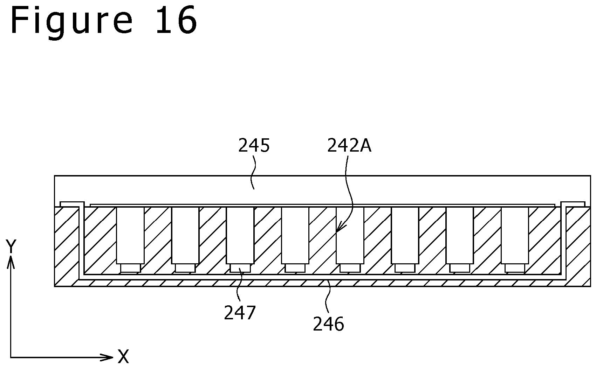

The configuration of a vehicle 240 of the fourth embodiment will be described with reference to FIGS. 15 and 16.

As shown in FIGS. 15 and 16, the vehicle 240 comprises the plurality of cylindrical power storage devices 60, a holder 241, an exhaust duct 245, a heat exchange member 246, and heat conductive members 247, the holder 241 holding the plurality of power storage devices 60, the exhaust duct 245 being provided at the upper part of the holder 241, the heat exchange member 246 cooling the power storage devices 60, the heat conductive members 247 thermally connecting the plurality of power storage devices 60 to the heat exchange members 243. The power storage devices 60 have the same configuration as those in the first embodiment and hence, the description of such components will be omitted.

The detail of the holder 241 will be described later. When the power storage devices 60 are in an abnormal state, the exhaust duct 245 discharges gas in the power storage devices 60 to the outside. The exhaust duct 245 has an exhaust port (not shown) that communicates with the outside of the vehicle 240.

The heat exchange member 246 is a member disposed in the holder 241 to cool the lower end portions of the power storage devices 60. Although a plate-like metal having thermal conductivity is used for the heat exchange member 246 in the present embodiment, a water cooling pipe, an air cooling fin, a refrigerant cooling pipe, a panel heater, a sheet heater, or the like may be used.

The heat conductive members 247 are members that are interposed between the power storage devices 60 and the heat exchange member 246, and that thermally connect the power storage devices 60 to the heat exchange member 246. A fluid having viscosity is used for the heat conductive members 247, the gelatinous fluid being cured after a lapse of a predetermined time period. In the present embodiment, silicon, as a two-component curing material, containing a metal oxide (e.g. an aluminum oxide, a zinc oxide), a metal nitride (e.g. an aluminum nitride, a boron nitride), a metal oxynitride (e.g. an aluminum oxynitride), or the like is used for the heat conductive members 247.

As shown in FIG. 15, the holder 241 is made of a thermoplastic resin, for example. Housings 242A are formed in the holder 241 so as to house the plurality of power storage devices 60. The housings 242A are formed to have a circular shape as viewed from the up-down direction Z. The power storage devices 60 are fitted in the housings 242A. The housings 242A formed at the end portions in the direction Y are formed with a predetermined interval from the end portions of the holder 241 in the direction Y.

With the above-mentioned configuration, when an impact load is applied from one side in the direction Y upon a side collision of a vehicle, it is possible to reduce an impact load that acts on the power storage devices 60.

A plurality of fastening parts 243A are formed at the end portions of the holder 241 in the direction Y so as to fasten the holder 241 to the body of the vehicle 240. The holder 241 in the present embodiment is fastened and fixed to the vehicle body with fixing members, such as bolts.

Assuming a collision of the pole crushing pusher P having a circular columnar shape from the direction Y, an interval $S_3$ in the direction X between the fastening part 243A and the adjacent fastening part 243A is determined based on a radius R of the pole crushing pusher P. Specifically, taking the radius of the hole of the fastening part 243A as "r", the interval $S_3$ is determined by the following expression (see FIG. 12).

[Expression 3]

$$S_3 = 2(r^2 + 2Rr)^{0.5}$$

With the above-mentioned configuration, when the pole crushing pusher P collides with one side in the direction Y, intrusion of the pole crushing pusher P is prevented by the fixing member fastened at the fastening part 243A and the fixing member fastened at the adjacent fastening part 243A. Consequently, it is possible to reduce an impact load that acts on the power storage devices 60.

<5-1. Configuration of Power Storage Module of Fifth Embodiment>

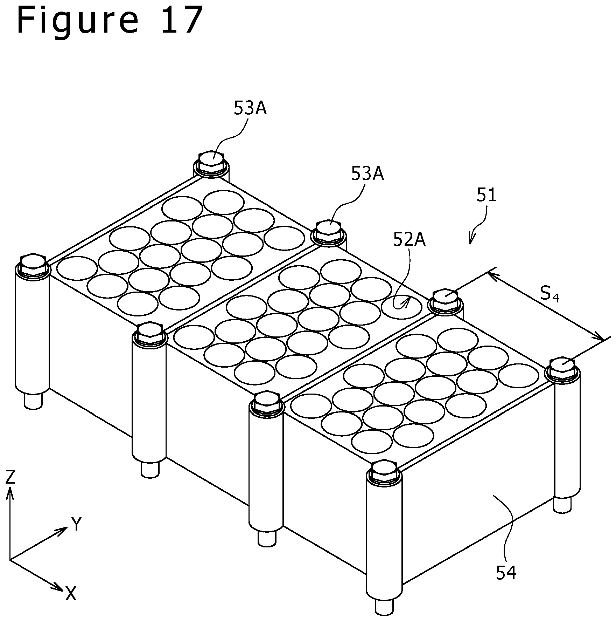

The configuration of a power storage module of a fifth embodiment will be described with reference to FIG. 17.

As shown in FIG. 17, the power storage module comprises a plurality of cylindrical power storage devices 60 (see FIG. 3), an upper holder (not shown), and a lower holder 51, the upper holder holding the upper side of each of the plurality of power storage devices 60 in the up-down direction Z, the lower holder 51 serving as a holder that holds the lower side of each of the plurality of power storage devices 60. The power storage devices 60 and the upper holder have the same configurations as those in the first embodiment and hence, the description of such components will be omitted.

As described above, the lower holder 51 serving as the holder holds the lower side of each of the plurality of power storage devices 60. The length of the lower holder 51 in the up-down direction Z is sufficiently larger than the length of the upper holder 9 in the up-down direction Z. Therefore, the lower holder 51 holds the intermediate part and the lower part of each of the plurality of power storage devices 60. Similar to the upper holder, the lower holder 51 is made of a thermoplastic resin, for example.

The lower holder 51 is formed to have a substantially rectangular shape as viewed from the up-down direction Z. Housings 52A are formed in the lower holder 51 so as to house the plurality of power storage devices 60. The housings 52A are formed to have a circular shape as viewed from the up-down direction Z. The intermediate parts and the lower parts of the power storage devices 60 are fitted in the housings 52A.

A plurality of fastening parts 53A are formed at the end portions of the lower holder 51 in the direction Y so as to fasten the lower holder 51 to a power storage pack (not shown). The plurality of fastening parts 53A may be formed at the end portions of the lower holder 51 in the direction X. The lower holder 51 in the present embodiment is fastened and fixed to the power storage pack with fixing members, such as bolts. The lower holder 51 may be fastened and fixed to the body of a vehicle with fixing members, such as bolts. Each fastening part 53A is formed at a semi-circular projection protruding outward in the direction Y as viewed from the up-down direction Z.

The fastening parts 53A are formed outward of the housings 52A in the direction Y. To be more specific, in the direction Y, the housings 52A are formed inward of the heads of the fixing members disposed at the fastening parts 53A.

Reinforcing plates 54 are provided for the lower holder 51 at positions in the direction X at which the fastening parts 53A are formed, the reinforcing plates 54 protruding more than the housings 52A in the direction Y, and being made of a material having higher rigidity than a material used for the lower holder 51. The reinforcing plates 54 are made of metal, for example, and are preferably integrally formed with the lower holder 51 by insertion molding at the time of molding the lower holder 51. The length of the reinforcing plates 54 in the direction Y and the length of the reinforcing plates 54 in the up-down direction Z are preferably substantially equal to the length of the lower holder 51 in the direction Y and the length of the lower holder 51 in the up-down direction Z. However, the above-mentioned lengths in the up-down direction Z need not be equal to each other. The positions of the reinforcing plates 54 are not limited to the above, and the reinforcing plates 54 may be located at positions different from the fastening parts 53A in the direction X provided that the reinforcing plates 54 protrude more than the fastening parts 53A in the direction Y.

Assuming a collision of a pole crushing pusher P having a circular columnar shape from the direction Y, an interval $S_4$ in the direction X between the fastening part 53A and the adjacent fastening part 53A is determined based on a radius R of the pole crushing pusher P. Specifically, taking the radius of the hole of the fastening part 53A as "r", the interval $S_4$ is determined by the following expression.

[Expression 4]

$$S_4 = 2(r^2 + 2Rr)^{0.5}$$

With the above-mentioned configuration, when the pole crushing pusher P collides with one side in the direction Y, intrusion of the pole crushing pusher P is prevented by the fixing member fastened at the fastening part 53A and the fixing member fastened at the adjacent fastening part 53A.

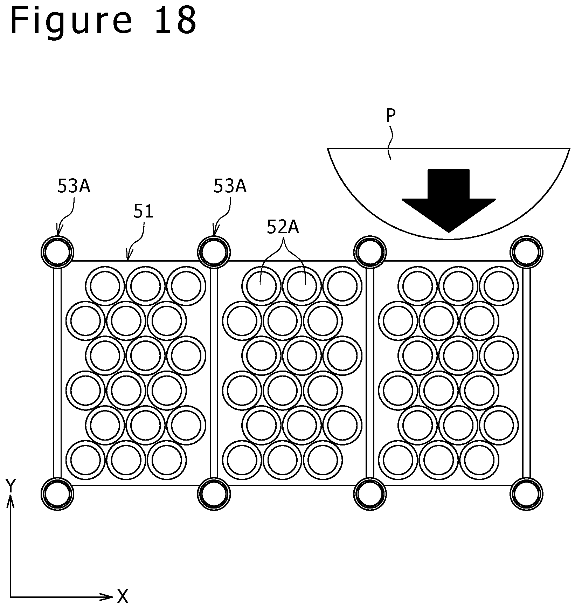

The present disclosure assumes a side collision of a vehicle (or electronic equipment). Thus, a collision test from the direction Y is performed on the power storage module using the pole crushing pusher P. As shown in FIG. 18, an impact load is applied to the power storage module from the right side in the direction Y by the pole crushing pusher P.

For example, when the pole crushing pusher P collides with the fastening part 53A, since the reinforcing plates 54 are provided for the fastening parts 53A along the direction Y, the portions in the direction X at which the fastening parts 53A are formed have increased strength, and thus only a small impact load acts on the power storage devices 60. When the pole crushing pusher P collides with a portion between the fastening part 53A and the adjacent fastening part 53A, since the interval $S_4$ between the fastening parts 53A is determined as described above, intrusion of the pole crushing pusher P is prevented by the fixing member fastened at the fastening part 53A and the fixing member fastened at the adjacent fastening part 53A.

With the power storage module, even when an impact load acts upon a side collision of a vehicle, it is possible to reduce a load that acts on the power storage devices 60. Consequently, it is possible to increase a withstand load of the power storage module.

The present disclosure is not limited to the embodiments and the modifications of the embodiments described above and, needless to say, various modifications and improvements are conceivable within the scope of the matters described in Claims of the present application.

REFERENCE SIGNS LIST

9 Upper holder, 10 Power storage module, 11 Lower holder (holder), 12 Body, 12A Housing, 13 Outer peripheral part, 13A Fastening part, 14 Gap, 14A Gap (first gap), 14B Gap (second gap), 14C Gap (third gap), 15 Support part, 16 Fragile part (second fragile part), 17 Fragile part (third fragile part), 20 Power storage module, 21 Lower holder (holder), 22 Body, 22A Housing, 23 Outer peripheral part, 23A Fastening part, 24 Gap, 24A Gap (first gap), 24B Gap (second gap), 24C Gap (third gap), 26 Fragile part (second fragile part), 27 Fragile part (third fragile part), 28 First leaf spring, 29 Second leaf spring, 30 Power storage module, 31 Lower holder (holder), 32 Body, 32A Housing, 33 Outer peripheral part, 33A Fastening part, 34 Gap, 34A Gap (first gap), 34B Gap (second gap), 34C Gap (third gap), 35 Leaf spring, 36 Fragile part (second fragile part), 37 Fragile part (third fragile part), 41 Lower holder (holder), 42A Housing, 43A Fastening part, 51 Lower holder (holder), 52A Housing, 53A Fastening part, 54 Reinforcing plate, 60 Power storage device, 61 Positive electrode, 62 Negative electrode, 63 Separator, 64 Electrode group, 65 Outer can, 65A Groove, 66 Sealing assembly, 67 Positive electrode lead, 68 Negative electrode lead, 69 Gasket, 70 Insulating plate, 140 Power storage pack, 141 Casing, 143A Fastening part, 144 Heat exchange member, 240 Vehicle, 241 Holder, 241A Fastening part, 242A Housing, 243 Heat exchange member, 245 Exhaust duct, 246 Heat exchange member, 247 Heat conductive member

**Claims**

1. A power storage module, comprising:

   at least one power storage device having a cylindrical shape; and
   a holder configured to maintain the power storage device in an axial direction, wherein
   the holder includes a body and an outer peripheral part, the body including a housing configured to hold the power storage device, the outer peripheral part surrounding the body with gaps provided between the outer peripheral part and the body, and
   when a direction orthogonal to the axial direction of the power storage device is taken as a first direction, and a direction orthogonal to both the axial direction and the first direction is taken as a second direction, an impact buffer is provided in a first gap among the gaps, the first gap being between the body and the outer peripheral part in the first direction.

2. The power storage module according to claim 1, wherein
   the impact buffer includes a plurality of support parts configured to couple a first connection part of the outer peripheral part to a plurality of second connection parts of the body, the plurality of second connection parts being arranged in the axial direction of the power storage device and in the second direction.

3. The power storage module according to claim 2, wherein
   each of the plurality of support parts extends in an inclined manner in such a way as to intersect with the first direction.

4. The power storage module according to claim 2 or 3, wherein

   a plurality of fastening parts are formed on the outer peripheral part so as to fasten the holder, the plurality of fastening parts are arranged side by side in the second direction, and
   the first connection part is provided between a pair of adjacent fastening parts among the plurality of fastening parts.

5. The power storage module according to claim 4, wherein
   a first fragile part is provided between one fastening part of the pair of adjacent fastening parts and the first connection part.

6. The power storage module according to any one of claims 2 to 5, wherein

a second fragile part is formed in a second gap among the gaps, the second gap being between the body and the outer peripheral part in the second direction, the second fragile part coupling the outer peripheral part to the body.

7. The power storage module according to any one of claims 2 to 6, wherein

the holder includes a plurality of the bodies, the plurality of the bodies are arranged side by side in the second direction with a third gap provided between the plurality of the bodies, and a third fragile part is formed in the third gap, the third fragile part coupling the plurality of the bodies to each other.

8. The power storage module according to any one of claims 2 to 7, wherein
the outer peripheral part has a cylindrical shape.

9. The power storage module according to claim 1, wherein
the impact buffer includes a first leaf spring and a second leaf spring, the first leaf spring constituting a portion of the outer peripheral part, the portion extending along the second direction, the second leaf spring coupling the first leaf spring to a pair of second connection parts of the body, the pair of second connection parts being arranged in the second direction.

10. The power storage module according to claim 9, wherein

a plurality of fastening parts are formed on the outer peripheral part so as to fasten the holder, the plurality of fastening parts being arranged in the second direction, and
the first leaf spring is disposed between a pair of adjacent fastening parts among the plurality of fastening parts, and is coupled to the pair of fastening parts.

11. The power storage module according to claim 9 or 10, wherein

the first leaf spring and the second leaf spring are coupled to each other at a first coupling part, and
a first fragile part is formed on the first leaf spring at a position between the first coupling part and one fastening part of the pair of fastening parts.

12. The power storage module according to any one of claims 9 to 11, wherein
a second fragile part is formed in a second gap among the gaps, the second gap being between the body and the outer peripheral part in the second direction, the second fragile part coupling the outer peripheral part to the body.

13. The power storage module according to any one of claims 9 to 12, wherein

the holder includes a plurality of the bodies, the plurality of the bodies are arranged side by side in the second direction with a third gap provided between the plurality of the bodies, and a third fragile part is formed in the third gap, the third fragile part coupling the plurality of the bodies to each other.

14. The power storage module according to any one of claims 9 to 13, wherein
the outer peripheral part has a cylindrical shape.

15. The power storage module according to claim 1, wherein
the impact buffer includes a leaf spring having an arch shape and coupled to a first connection part of the outer peripheral part and to a pair of second connection parts of the body, the pair of second connection parts being arranged in the second direction of the power storage device.

16. The power storage module according to claim 15, wherein

a plurality of fastening parts are formed on the outer peripheral part so as to fasten the holder, the plurality of fastening parts being arranged in the second direction, and
the first connection part is provided between a pair of adjacent fastening parts among the plurality of fastening parts.

17. The power storage module according to claim 16, wherein
a first fragile part is provided between one fastening part of the pair of adjacent fastening parts and the first connection part.

18. The power storage module according to any one of claims 15 to 17, wherein
a second fragile part is formed in a second gap among the gaps, the second gap being between the body and the outer peripheral part in the second direction, the second fragile part coupling the outer peripheral part to the body.

19. The power storage module according to any one of claims 15 to 18, wherein

the holder includes a plurality of the bodies, the plurality of the bodies are arranged side by side in the second direction with a third gap provided between the plurality of the bodies, and a third fragile part is formed in the third gap, the third fragile part coupling the plurality of the bodies to each other.

20. The power storage module according to any one of claims 15 to 19, wherein
the outer peripheral part has a cylindrical shape.

21. The power storage module according to any one of claims 15 to 20, wherein
the leaf spring is brought into contact with the outer peripheral part at the first connection part.

# Figure 1

# Figure 2

# Figure 3

# Figure 4A

# Figure 4B

# Figure 4C

# Figure 5

# Figure 6

# Figure 7A

# Figure 7B

# Figure 7C

# Figure 8

# Figure 9

# Figure 10A

# Figure 10B

# Figure 10C

# Figure 11

# Figure 12

$$(R+r)^2 = R^2 + x^2$$

$$x = (r^2 + 2Rr)^{0.5}$$

$$S_1 = 2(r^2 + 2Rr)^{0.5}$$

# Figure 13

# Figure 14

41    143A    $S_2$    143A    140

141

# Figure 15

# Figure 16

# Figure 17

# Figure 18

# INTERNATIONAL SEARCH REPORT

| | International application No. |
|---|---|
| | **PCT/JP2023/023986** |

| A. | CLASSIFICATION OF SUBJECT MATTER |
|---|---|

*H01M 50/291*(2021.01)i; *H01G 11/10*(2013.01)i; *H01G 11/78*(2013.01)i; *H01M 50/213*(2021.01)i; *H01M 50/242*(2021.01)i; *H01M 50/244*(2021.01)i; *H01M 50/289*(2021.01)i
FI:  H01M50/291; H01G11/10; H01G11/78; H01M50/213; H01M50/242; H01M50/244 Z; H01M50/289

According to International Patent Classification (IPC) or to both national classification and IPC

| B. | FIELDS SEARCHED |
|---|---|

Minimum documentation searched (classification system followed by classification symbols)

H01M50/291; H01G11/10; H01G11/78; H01M50/213; H01M50/242; H01M50/244; H01M50/289

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019/064467 A1 (HONDA MOTOR CO., LTD.) 04 April 2019 (2019-04-04) paragraphs [0016]-[0053], fig. 1-6 | 1-3, 8 |
| A | paragraphs [0016]-[0053], fig. 1-6 | 4-7, 9-21 |
| X | KR 10-2015-0100082 A (SAMSUNG SDI CO., LTD.) 02 September 2015 (2015-09-02) paragraphs [0022]-[0049], fig. 1-6 | 1-3, 8 |
| A | paragraphs [0022]-[0049], fig. 1-6 | 4-7, 9-21 |
| X | JP 2014-049225 A (SONY CORP.) 17 March 2014 (2014-03-17) paragraphs [0014]-[0055], fig. 1-20 | 1 |
| A | paragraphs [0014]-[0055], fig. 1-20 | 2-21 |
| A | JP 2013-073845 A (SONY CORP.) 22 April 2013 (2013-04-22) paragraphs [0014]-[0114], fig. 1-20 | 1-21 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/023986**

| Patent document cited in search report | | | Publication date (day/month/year) | Patent family member(s) | | | Publication date (day/month/year) |
|---|---|---|---|---|---|---|---|
| WO | 2019/064467 | A1 | 04 April 2019 | US | 2020/0227696 | A1 | |
| | | | | paragraphs [0022]-[0059], fig. 1-6 | | | |
| | | | | EP | 3690977 | A1 | |
| | | | | CN | 111183529 | A | |
| | | | | KR 10-2020-0060485 | | A | |
| KR | 10-2015-0100082 | A | 02 September 2015 | US | 2015/0243944 | A1 | |
| | | | | paragraphs [0034]-[0065], fig. 1-6 | | | |
| JP | 2014-049225 | A | 17 March 2014 | US | 2015/0214518 | A1 | |
| | | | | paragraphs [0043]-[0098], fig. 1-20 | | | |
| | | | | WO | 2014/034020 | A1 | |
| | | | | CN | 104521027 | A | |
| JP | 2013-073845 | A | 22 April 2013 | US | 2015/0222131 | A1 | |
| | | | | paragraphs [0043]-[0176], fig. 1-20 | | | |
| | | | | CN | 103117367 | A | |
| | | | | KR 10-2013-0034596 | | A | |

Form PCT/ISA/210 (patent family annex) (January 2015)

**REFERENCES CITED IN THE DESCRIPTION**

**Patent documents cited in the description**

- JP 2015156320 A